# EUROPÄISCHE PATENTSCHRIFT

(11) **EP 3 053 884 B1**
(45) Veröffentlichungstag und Bekanntmachung des Hinweises auf die Patenterteilung: **10.10.2018**
(21) Anmeldenummer: 16153881.4
(22) Anmeldetag: 02.02.2016
(51) Int. Cl.: C02F 3/12, C02F 3/10, C02F 3/08, C02F 3/20

(54) **KLÄRANLAGE FÜR ABWÄSSER MIT RÜCKHALTEVORRICHTUNG FÜR DARIN SCHWEBENDE TRÄGERMATERIALKÖRPER**
TREATMENT PLANT FOR WASTE WATER HAVING A RETAINING DEVICE FOR CARRIER MATERIAL FLOATING THEREIN
STATION D'EPURATION D'EAUX USEES COMPRENANT UN DISPOSITIF DE RETENUE DE MATERIAUX EN SUSPENSION

(30) Priorität: 03.02.2015 DE 202015100502 U
(43) Veröffentlichungstag der Anmeldung: 10.08.2016
(73) Patentinhaber: KVT Klävertec GmbH, 21762 Otterndorf (DE)
(72) Erfinder: Köster, Wilfried, 21762 Otterndorf (DE)
(74) Vertreter: Raffay & Fleck

(56) Entgegenhaltungen:
- DE-A1- 10 127 554
- JP-A- H0 398 695
- US-A1- 2013 037 466

## Beschreibung

Die Erfindung betrifft eine Kläranlage für Abwässer mit einem Klärbecken, in dem mit einem Biofilm belegte Trägermaterialkörper verwirbelt werden, wobei das Abwasser an einem Zulauf, bedarfsweise von einem Vorklärbecken, zufließt und über einen Ablauf als Klarwasser abfließt, wobei zumindest der Ablauf eine Rückhaltevorrichtung mit kreisförmigen Öffnungen, die eine Öffnungsweite geringfügig kleiner als die kleinste Dimension der Trägermaterialkörper haben, zum Zurückhalten der Trägermaterialkörper im Klärbecken aufweist.

Derartige Kläranlagen sind als sog. Wirbel-Schwebebettanlagen in unterschiedlicher Ausgestaltung, beispielsweise aus der DE 298 19 446 U1, bekannt. Dabei gehört zum Aufbau derartiger Kläranlagen meist ein Vorklärbecken, von dem das zu reinigende Abwasser in das eigentliche Klärbecken (bioglogische Stufe) gelangt. In diesem Klärbecken befinden sich im Abwasser schwebende Trägermaterialkörper, an deren Oberfläche sich ein Biofilm bildet, der maßgeblich für die in dieser biologischen Stufe erfolgenden biologischen Abwasserreinigung ist. Dabei wird in das Klärbecken über eine Belüftungseinrichtung feinblasig Luft in den Wasserkörper eingeleitet, woraus sich eine Strömung im Klärbecken bildet, so dass die Trägermaterialkörper in einer sich ausbildenden Strömungswalze verwirbelt werden. In dieser Phase erfolgt eine aerobe Reinigung des Abwassers, da das Abwasser durch die Belüftung eine sehr hohe Sauerstoffkonzentration (bis zur Sauerstoffsättigung) erhält.

Die Belüftungseinrichtung wird jedoch intermittierend eingesetzt, um zwischen zwei Belüftungsphasen eine Ruhephase zu haben, in der der ins Abwasser eingebrachte Sauerstoff schnell von den Mikroorganismen aufgebraucht wird und sich ein anaerobes Milieu bildet, in dem eine Abwasserreinigung in Form einer Denitrifikation abläuft.

Dabei ist es sehr wichtig, dass eine große Anzahl von kleinen Trägermaterialkörpern mit einem dünnen Biofilm eine möglichst große biologisch aktive Oberfläche zur Verfügung stellen. Entsprechend intensiv und tiefgreifend wird die Reinigung des Abwassers in dieser biologischen Stufe. Dabei muss durch geeignete Rückhaltevorrichtungen gewährleistet werden, dass die Trägermaterialkörper nicht mit dem Ablaufen des Klarwassers in eine Nachklärstufe oder in den Klarwasserabfluss gelangen. Ferner ist es bei einem Rückstau ebenfalls vorteilhaft, wenn keine Trägermaterialkörper entgegen der üblichen Flussrichtung in die Vorklärung gelangen können.

Für die Rückhaltung von Trägermaterialkörpern in der Biostufe schlägt die DE 196 26 592 A1 ein unten bis zum Boden der Biostufe herabreichendes, oben offenes Rohr, das 30 cm unter der Wasseroberfläche endet, vor. Dabei steckt in diesem größeren Rohr mit einem ausreichenden Ringabstand ein kleineres Rohr, das dem Wasserabfluss dient, wobei dies kleinere Rohr bis ca. 30 cm über dem Boden reicht.

Ferner wurden zum Zurückhalten von Trägermaterialkörpern in Kläranlagen Schlitzrohre verwendet, die aus herkömmlichen KG-Rohren hergestellt werden, wobei in die Mantelfläche des Rohrabschnittes axial ausgerichtete Längsschlitze eingebracht sind. Die Länge der Längsschlitze kann dabei auf die geometrischen Gegebenheiten des Klärbeckens, nämlich etwa auf die Höhe der Schwebeschicht der Trägermaterialkörper bei ausgeschalteter Belüftung (anoxische Schwebeschicht) abgestimmt werden. Eine derartige als Schlitzrohr ausgebildete Fangvorrichtung ist beispielsweise aus DE 298 19 446 U1, DE 101 23 152 B4, DE 101 27 554A1 sowie DE 203 10 249 U1 bekannt.

Nachteilig an derartigen Schlitzrohren ist jedoch der erhebliche Bearbeitungsaufwand beim Herstellen der Schlitze, die meist mit einem handgeführten Trennschleifer mit Trennscheibe eingeschnitten werden, und ferner besteht die Gefahr, dass sich Trägermaterialkörper in den Schlitzen verklemmen. Ferner ist nachteilig, dass das Schlitzrohr weit in den Klärbeckenbereich hineinragt und somit die sich bei der Belüftung ausbildende Strömungswalze stört und folglich die Effizienz der Verwirbelung reduziert.

Ferner sind auch Siebe zum Zurückhalten von Trägermaterialkörpern in Kläranlagen bekannt, jedoch besteht hier das Problem darin, dass die Siebe leicht zuwachsen und damit den Abfluss behindern oder gar gänzlich verschließen.

Die US 2013/037466 A1 beschreibt eine Kläranlage mit einem Klärbecken, in dem Biofilmträger verwirbelt werden, wobei eine Rückhaltevorrichtung aus Siebplatten besteht mit einer Vielzahl kreisförmiger Öffnungen, die kleiner als die Trägerkörper sind. Diese Siebplatten sind an einer Wandung des Klärbeckens angeschmiegt.

Entsprechend schlägt die DE 297 18 771 U1 eine Ablaufvorrichtung für Schwebebett-Bioreaktoren vor, bei der kreis- oder schlitzförmige Ablauföffnungen in einem in das Klärbecken hineinragenden Ablaufrohr vorgesehen sind, wobei das Ablaufrohr einen Anstellwinkel seines in das Klärbecken reichenden Endes zwischen der Längsachse des Ablaufrohres und der Strömungsrichtung der verwirbelten Abwässer und Trägermaterialkörper von 10 bis 45º haben soll. Diese Anordnung des Ablaufrohres geneigt in das Klärbecken hineinzeigend mag zwar verhindern, dass sich die Ablauföffnungen mit Biofilm oder Ansammlungen von Trägermaterialkörpern zusetzen, jedoch stört ein derart in das Klärbecken hineinragendes Ablaufrohr deutlich die erwünschte Umwälzung der Trägermaterialkörper im Klärbecken. Dies führt einerseits zu hydraulischen Totbereichen, in denen die im Wasser schwimmenden Trägermaterialkörper kaum bewegt werden sowie andererseits dazu, dass zur Aufrechterhaltung einer ausreichenden, stabilen Strömungswalze im Klärbecken ein erhöhter Luftbedarf für die Belüftungseinrichtung mit entsprechend höherem Energieverbrauch erforderlich wird.

Aufgabe der Erfindung ist es daher, ausgehend vom vorgenannten Stand der Technik eine Kläranlage für Abwässer anzugeben, die eine Rückhaltevorrichtung aufweist, die die Strömung im Klärbecken möglichst kaum behindert, an der sich die Trägermaterialkörper nicht verklemmen und die auch nicht durch aufwachsenden Biofilm verstopfen kann.

Gelöst wird diese Aufgabe bei einer gattungsgemäßen Kläranlage dadurch, dass die Rückhaltevorrichtung ein Gehäuse hat, das ein flaches, an einer Wandung des Klärbeckens angeschmiegtes Volumen aufspannt, wobei die an der Wandung des Klärbeckens angeschmiegte Rückseite des Gehäuses einen Rohranschluss oder Rohrstutzen für den Ablauf hat und darüber hinaus geschlossen ausgebildet ist, wobei im Übrigen das Gehäuse eine Vielzahl von elliptischen oder kreisrunden Öffnungen aufweist.

Durch die flache, an der Klärbeckenwandung angeschmiegte Ausbildung der Rückhaltevorrichtung ragt diese nur wenig in das Klärbecken hinein und stört folglich die Bewegungsbahnen der verwirbelten Trägermaterialkörper im Klärbecken nicht. Entsprechend erfolgt eine intensive Verwirbelung der im Klärbecken schwebenden Trägermaterialkörper im gesamten Klärbecken. Die im Gehäuse bevorzugt kreisrund ausgebildeten Öffnungen haben eine Öffnungsweite kleiner als die kleinste Dimension der im Klärbecken verwendeten Trägermaterialkörper, so dass die Trägermaterialkörper, die meist halbkugelförmig oder zylinderabschnittförmig ausgebildet sind, nicht durch die Öffnungen hindurchtreten und sich auch nicht in der Öffnung verhaken oder verklemmen können.

Wenn die Rückhaltevorrichtung am Zulauf und am Ablauf im Klärbecken angeordnet ist, wird nicht nur der Ablauf für das Klarwasser vor einem unbeabsichtigten Hindurchtreten von Trägermaterialkörpern gesichert, sondern auch der Zulauf so gesichert, dass keine Trägermaterialkörper bei einem etwaigen Aufstauen von Abwasser in der Kläranlage in den Zulauf hineintreten könnten.

Dadurch, dass das Gehäuse ein flaches trapezoides oder quaderförmiges Volumen aufspannt, wobei in Einbausituation im Klärbecken nach oben zeigende Seitenflächen keine Öffnungen haben, wird erreicht, dass nur nach unten zeigende bis allenfalls senkrecht stehende Wandungen des Gehäuses mit Öffnungen versehen sind. Die so ausgerichteten Öffnungen werden bei der Belüftung stets mit von der verwirbelten Strömung im Klärbecken angeströmt und von darin schwebenden Trägermaterialkörpern reibend berührt, so dass sich allenfalls ein dünner Biofilm auf dem Gehäuse der Rückhaltevorrichtung bilden kann. Ein stärkeres Zuwachsen wird durch die Anströmung und die mechanischen Berührungen durch die Trägerelemente unterbunden.

Sowohl um den Strömungswiderstand der Rückhaltevorrichtung nahe der Strömungswalze weiter zu verringern und die zur Abreinigung gewünschte Anströmung und mechanische Berührung mit Trägermaterialkörpern über die gesamte entsprechend ausgerichtete Oberfläche des Gehäuses zu gewährleisten, ist das Gehäuse in Einbausituation im Klärbecken nach unten verjüngend ausgebildet.

Wenn die in Einbausituation im Klärbecken am tiefsten liegende Öffnung der Rückhaltevorrichtung sich noch innerhalb der im Klärbecken bildenden Schicht der nicht verwirbelten Trägermaterialkörper befindet, wird sichergestellt, dass beim Klarwasserablauf stets Wasser aus dem Bereich der ohne Belüftung anoxisch wirkenden Schwebeschicht der Trägermaterialkörper entnommen wird. Damit wird weitgehend vermieden, dass noch ungeklärtes Abwasser in den Ablauf gelangen könnte.

Bei einem Befüllgrad von etwa 50 % des Volumens des Klärbeckens mit Trägermaterialkörpern wird dies dadurch erreicht, dass die am tiefsten liegende Öffnung der Rückhaltevorrichtung in eine Beckentiefe von der Oberfläche von 30 % bis 50 % reicht.

Wenn die kreisrunden Öffnungen einen Durchmesser von 10 mm bis 30 mm, insbesondere 18 mm bis 23 mm haben, können Trägermaterialkörper mit einer kleinsten Größendimension von 12 bis 40 mm und insbesondere halbkugelschalenförmige Trägermaterialkörper mit einem Durchmesser von 25 bis 40 mm sicher zurückgehalten werden, wobei die Öffnungsweite der kreisrunden Öffnungen bereits so groß sind, dass ein Zuwachsen der Öffnungen nicht möglich ist.

Um den Spaltbereich zwischen der in der Wandung des Klärbeckens vorgesehenen Ablauföffnung und dem Rohranschluss oder Rohrstutzen des Rückhaltevorrichtungsgehäuses abzudichten ist in der Rückseite des Gehäuses um den Rohranschluss oder den dort angeformten Rohrstutzen eine Aufnahmenut für eine umlaufende dauerelastische Dichtung vorgesehen.

Wenn die Rückhaltevorrichtung aus Kunststoff im Rotationssintern hergestellt ist, kann das Gehäuse der Rückhaltevorrichtung kostengünstig in kleineren und mittleren Stückzahlen hergestellt werden. Kunststoff verhält sich bei der Berührung mit Abwässern neutral und wird nicht davon angegriffen. Die beschriebene Form lässt sich leicht im Rotationsintern herstellen, wobei beispielsweise die Öffnungen als vorstehende, geschlossene Kalotten geformt werden können, wobei die vorstehenden Kalotten anschließend mit einem geeigneten Schneidewerkzeug (beispielsweise mit einer Bandsäge) abgeschnitten werden, so dass sich die Durchlassöffnungen ergeben.

Dadurch, dass das Gehäuse der Rückhaltevorrichtung Befestigungsmittel zur Halterung einer feinblasigen Belüftungseinrichtung aufweist, so dass die Belüftungseinrichtung in Einbausituation unterhalb der Rückhaltevorrichtung im Klärbecken angeordnet ist, wird die Belüftungseinrichtung so orientiert, dass die sich aus den feinblasig aufsteigenden Luftblasen bildende Strömungswalze von unten nach oben direkt am Gehäuse der Rückhaltevorrichtung entlang streicht, so dass eine gute Reinigungswirkung an der Oberfläche des Gehäuses erfolgt.

Wenn das Befestigungsmittel eine in Einbausituation vertikale Nut im Gehäuse der Rückhaltevorrichtung aufweist, kann die Tiefeneinstellung der Belüftungseinrichtung im Klärbecken in einfacher Weise durch verschieben entlang der vertikalen Nut gewählt werden.

Nachfolgend wird ein Ausführungsbeispiel der Erfindung anhand der beiliegenden Figuren detailliert beschrieben.

Darin zeigt:
- Fig. 1: ein Klärbecken mit einer Rückhaltevorrichtung in schematischem Querschnitt,
- Fig. 2: eine räumliche Ansicht einer Rückhaltevorrichtung und
- Fig. 3: die in Fig. 1 dargestellte Rückhaltevorrichtung in räumlicher Ansicht von der Rückseite gesehen.

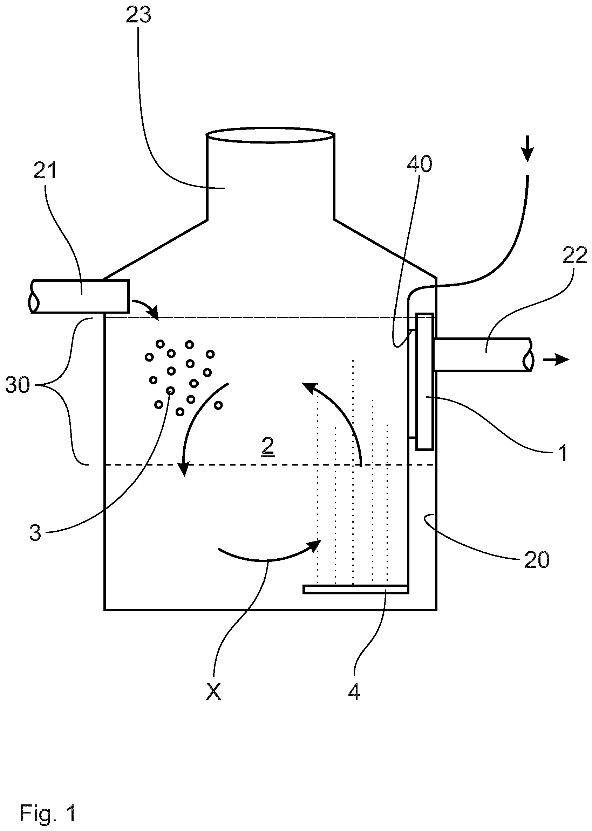

In Fig. 1 ist eine Kläranlage für Abwasser mit einem Klärbecken 2 in schematischem Querschnitt dargestellt. Das Klärbecken 2 ist beispielsweise ein im Boden eingelassener Kunststoffbehälter mit Mannloch 23, in dem ein Zulauf 21 einmündet. Über den Zulauf 21 wird beispielsweise Abwasser aus einem Vorklärbecken, das hier nicht dargestellt ist, zugeführt. Das vorgeklärte Abwasser gelangt in das Klärbecken 2, in dem die biologische Reinigung des Abwassers erfolgt. Zur Reinigung sind im Klärbecken 2 eine Vielzahl von Trägermaterialkörper 3, etwa 50 % des Gesamtvolumens einnehmend, eingefüllt, die an ihrer feingliedrigen Oberfläche einen Biofilm aufweisen, der die für die biologische Reinigung erforderlichen Mikroorganismen enthält. Die Trägermaterialkörper 3 sind beispielsweise halbkugelschalenförmige Kunststoffteile mit einem Durchmesser von 25 mm, die im Markt unter der Bezeichnung "Picobells" von der Anmelderin angeboten werden.

Ferner ist in dem Klärbecken 2 ein Ablauf 22 vorgesehen, über den das geklärte Abwasser (Klarwasser) abhängig von der Menge des über Zulauf 21 zuströmenden Abwassers ablaufen kann. Bedarfsweise kann das geklärte Abwasser nochmals in einer Nachklärstufe, die hier nicht dargestellt ist, nachbehandelt werden. Am Ablauf 22 ist eine Rückhaltevorrichtung 1 ausgebildet, die ein Gehäuse 10 hat, das ein flaches, an einer Wandung 20 des Klärbeckens 2 angeschmiegtes Volumen aufspannt.

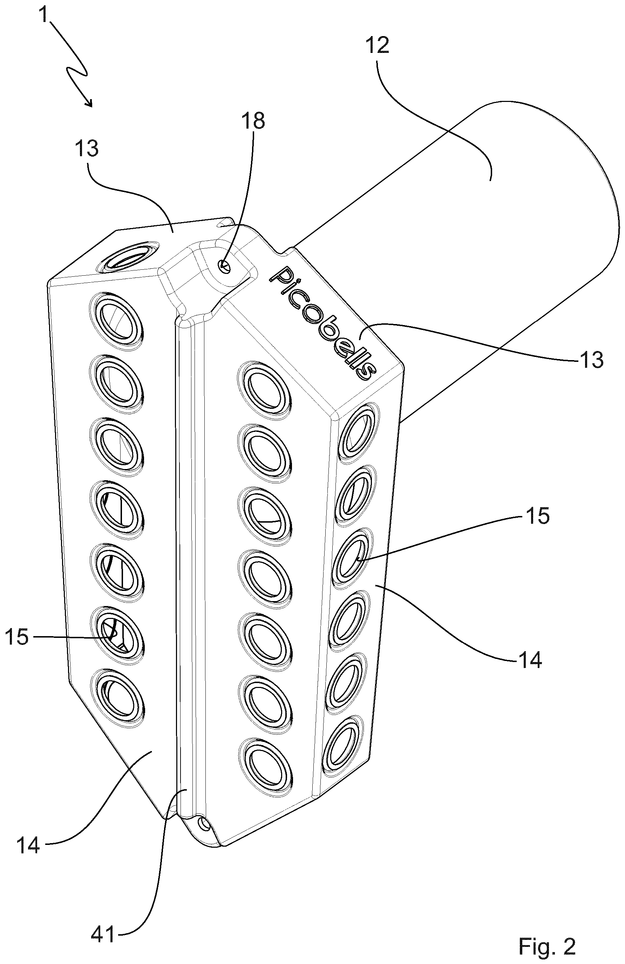

Wie in Figur 2 ersichtlich, besteht das Gehäuse 10 der Rückhaltevorrichtung 1 aus einem im Rotationssintern hergstellten Kunststoffgehäuse, das auf den in Einbausituation nach unten bzw. in den Wasserkörper des Klärbeckens 2 zeigenden Seitenflächen 14 eine Vielzahl von Öffnungen 15 aufweist. Durch diese Öffnungen 15 kann das geklärte Abwasser (Klarwasser) in das Gehäuse 10 der Rückhaltevorrichtung 1 einströmen, ohne dass dabei die im Klärbecken 2 schwebenden Trägermaterialkörper 3 hindurchgelassen werden. Aufgrund der kreisrunden Öffnungen 15 mit einer Öffnungsweite geringfügig kleiner als die kleinste Dimension der Trägermaterialkörper 3, beispielsweise bei einem Durchmesser der Trägermaterialkörper von 25 mm eine Öffnungsweite von 20 mm, können die Trägermaterialkörper 3 nicht in den Ablauf 22 der Kläranlage gelangen.

Aufgrund der relativ großen Öffnungsweite der kreisrunden Öffnungen 15 wird dabei jedoch auch sicher vermieden, dass die Öffnungen durch den sich bildenden biologischen Rasen zuwachsen könnten. Da ferner das Gehäuse 10 der Rückhaltevorrichtung 1 in Einbausituation im Klärbecken 2 nach unten verjüngend ausgebildet ist und nur die nach unten oder zur Seite zeigenden Seitenflächen 14 des Gehäuses 10 mit den Öffnungen 15 versehen sind, werden die Öffnungen innerhalb des Klärbeckens 2 während der Belüftungsphase stark verwirbelt und entlang dieser Öffnungen 15, 15' entlanggeführt, sodass die Oberfläche des Gehäuses 10 und insbesondere die Öffnungen 15, 15' durch hydraulische und mechanische Reibung stets abgereinigt werden, sodass ein weiteres Wachstum und Zuwachsen der Öffnungen 15, 15' durch den sich bildenden biologischen Rasen ausgeschlossen ist.

Die in Einbausituation am tiefsten liegende Öffnung 15' liegt dabei in einer Beckentiefe von der Oberfläche von 30 bis 50 %, damit bei einer Befüllung des Klärbeckens 2 mit etwa 50 Vol.% Trägermaterialkörpern 3 das in dem Ablauf 22 fließende Klarwasser ausschließlich aus der Schicht 30 der Trägermaterialkörper 3 ausströmt.

Für die Belüftung ist eine feinblasige Belüftungseinrichtung 4 vorgesehen, die nahe am Boden im Klärbecken 2 unterhalb der Rückhaltevorrichtung 1 am Ablauf 22 angeordnet ist. Bei Druckluftbeauftragung der feinblasigen Belüftungseinrichtung 4 steigen feine Bläschen in dem im Klärbecken 2 gesammelten Abwasser auf, sodass das Abwasser schnell seinen Sauerstoffgehalt erhöht bis maximal zur Sauerstoffsättigung. Dabei werden mit den Bläschen eine Strömungswalze im Klärbecken 2 (siehe Pfeile X) induziert, mit der im Abwasser schwimmende Trägermaterialkörper 3 mitgerissen und verwirbelt werden.

Die feinblasige Belüftungseinrichtung 4 ist über Befestigungsmittel 40 mittels einer Druckluftzuleitung bzw. einem Hilfsgestänge an einer vertikalen Nut 41 im Gehäuse 10 der Rückhaltevorrichtung 1 befestigt, sodass die Belüftungseinrichtung 4 in ihrer Eintauchtiefe im Klärbecken 2 individuell einstellbar ist und die Belüftungseinrichtung 4 für Wartungszwecke leicht aus dem Klärbecken 2 herausgezogen und entfernt werden kann.

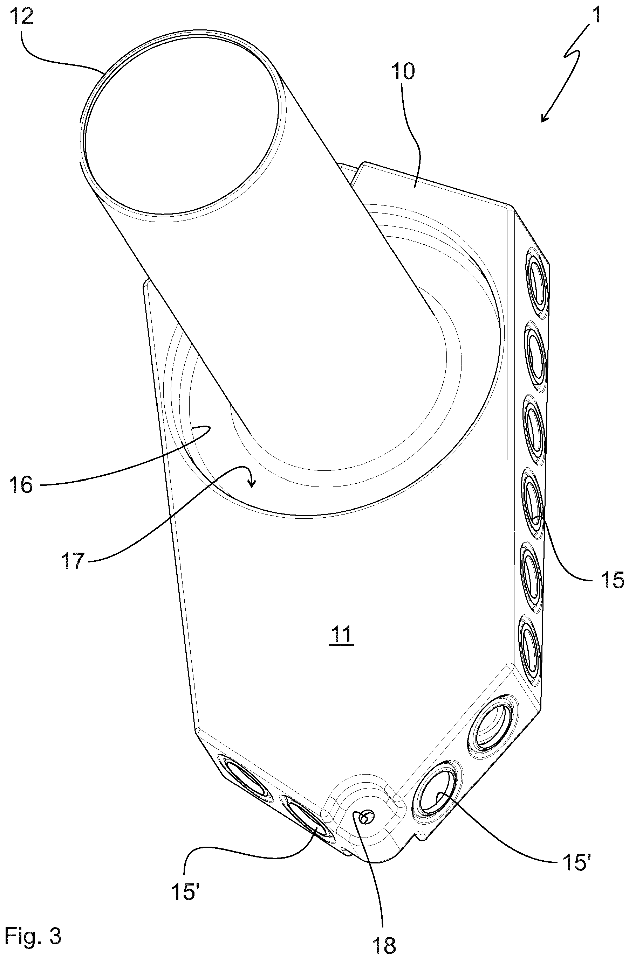

Die Rückseite 11 der Rückhaltevorrichtung 1 ist geschlossen ausgebildet, zeigt also keine Einströmungsöffnungen für Abwasser, da die Rückseite 11 direkt an der Wandung 20 des Klärbeckens 2 angeschmiegt ist. An der Rückseite 11 des Gehäuses 10 der Rückhaltevorrichtung 1 ist ein Rohrstutzen 12 angeformt, der direkt in den Ablauf 22 des Klärbeckens 2 eingesteckt ist. Zur Vermeidung einer Fehlströmung an der Rückhaltevorrichtung 1 vorbei ist in der Rückseite 11 des Gehäuses 10 eine Aufnahmenut 16 für eine nicht gesondert dargestellte Dichtung 17 ausgebildet (siehe Fig. 3). Ferner ist im Gehäuse 10 der Rückhaltevorrichtung 1 eine Befestigungsbohrung 18 vorgesehen, an der die Rückhaltevorrichtung 1 in geeigneter Weise innerhalb des Klärbeckens 2 zur Vermeidung von unerwünschten Lageveränderungen fixiert werden kann.

Nachfolgend wird die Herstellungsweise der Rückhaltevorrichtung beschrieben.

Bevorzugt wird die Rückhaltevorrichtung 1 aus thermoplastischem Kunststoff in einer beheizten und rotierenden Negativform im sogenannten Rotationssintern hergestellt. Die Rotationsform ist dabei eine Negativform, an der stutzenartige Vertiefungen an den Stellen für die Öffnungen 15, 15' vorgesehen sind, sodass sich nach dem Rotationssintern und Ausformen der Rückhaltevorrichtung 1 vom Gehäuse 10 vorstehende Kalotten im Bereich der Öffnungen 15 ergeben. Diese kalottenartigen Vorsprünge werden mit einem geeigneten Schneidemittel, beispielsweise einer Bandsäge, im wesentlichen planeben zur jeweiligen Seitenfläche abgeschnitten, sodass sich kreisrunde und an der Kante saubere Öffnungen 15, 15' ergeben.

### Bezugszeichenliste

- 1: Rückhaltevorrichtung
- 10: Gehäuse
- 11: Rückseite
- 12: Rohranschluss oder Rohrstutzen
- 13: nach oben zeigende Seitenfläche
- 14: Seitenfläche
- 15, 15': Öffnung, tiefstliegende Öffnung
- 16: Aufnahmenut
- 17: Dichtung
- 18: Befestigungsbohrung

- 2: Klärbecken
- 20: Wandung
- 21: Zulauf
- 22: Ablauf
- 23: Mannloch

- 3: Trägermaterialkörper
- 30: Schicht der Trägermaterialkörper

- 4: feinblasige Belüftungseinrichtung
- 40: Befestigungsmittel
- 41: vertikale Nut

- X: Strömungswalze

## Patentansprüche

1. Kläranlage für Abwässer mit einem Klärbecken (2) und mit darin angeordneten, im Klärbecken (2) verwirbelbaren und mit einem Biofilm belegten Trägermaterialkörpern (3), mit einem Zulauf (21) für Abwasser, welches bedarfsweise von einem Vorklärbecken zufließt und mit einem Ablauf (22) für Klarwasser, wobei der Ablauf (22) eine Rückhaltevorrichtung (1) aufweist und die Rückhaltevorrichtung (1) ein Gehäuse (10) hat, das ein Volumen aufspannt mit kreisförmigen Öffnungen (15), die eine Öffnungsweite geringfügig kleiner als die kleinste Dimension der Trägermaterialkörper (3) zum Zurückhalten der Trägermaterialkörper (3) im Klärbecken (2) haben, **dadurch gekennzeichnet, dass** das Gehäuse (10) mit seiner Rückseite an einer Wandung (20) des Klärbeckens (2) angeschmiegt ist und ein flaches, an der Wandung (20) des Klärbeckens (2) angeschmiegtes Volumen aufspannt, wobei die an der Wandung (20) des Klärbeckens (2) angeschmiegte Rückseite des Gehäuses (10) einen Rohranschluss oder Rohrstutzen (12) für den Ablauf (22) hat und darüber hinaus geschlossen ausgebildet ist, wobei im Übrigen das Gehäuse (10) eine Vielzahl von elliptischen oder kreisrunden Öffnungen (15) aufweist.

2. Kläranlage nach Anspruch 1, **dadurch gekennzeichnet, dass** je eine Rückhaltevorrichtung (1) am Zulauf (21) und am Ablauf (22) im Klärbecken (2) angeordnet ist.

3. Kläranlage nach Anspruch 1 oder 2, **dadurch gekennzeichnet, dass** das Gehäuse (10) ein flaches trapezoides oder quaderförmiges Volumen aufspannt, wobei eine oder mehrere in Einbausituation im Klärbecken (2) nach oben zeigende Seitenflächen (13) keine Öffnungen (15) haben.

4. Kläranlage nach Anspruch 1, 2 oder 3, **dadurch gekennzeichnet, dass** das Gehäuse (10) sich in Einbausituation im Klärbecken (2) nach unten verjüngend ausgebildet ist.

5. Kläranlage nach einem der vorangehenden Ansprüche, **dadurch gekennzeichnet, dass** die in Einbausituation im Klärbecken (2) am tiefsten liegende Öffnung (15') der Rückhaltevorrichtung (1) sich noch innerhalb der im Klärbecken (2) bildenden Schicht (30) der nicht verwirbelten Trägermaterialkörper (3) befindet.

6. Kläranlage nach einem der vorangehenden Ansprüche, **dadurch gekennzeichnet, dass** die kreisrunden Öffnungen (15, 15') einen Durchmesser von 10 mm bis 30 mm, insbesondere 18 mm bis 23 mm haben.

7. Kläranlage nach einem der vorangehenden Ansprüche, **dadurch gekennzeichnet, dass** in der Rückseite (11) des Gehäuses (10) um den Rohranschluss oder dort angeformten Rohrstutzen (12) eine Aufnahmenut (16) für eine umlaufende Dichtung (17) vorgesehen ist.

8. Kläranlage nach einem der vorangehenden Ansprüche, **dadurch gekennzeichnet, dass** die Rückhaltevorrichtung (1) aus Kunststoff hergestellt ist.

9. Kläranlage nach einem der vorangehenden Ansprüche, **dadurch gekennzeichnet, dass** das Gehäuse (10) der Rückhaltevorrichtung (1) Befestigungsmittel (40) zur Halterung einer feinblasigen Belüftungseinrichtung (4) aufweist, so dass die Belüftungseinrichtung (4) in Einbausituation unterhalb der Rückhaltevorrichtung (1) im Klärbecken (2) angeordnet ist.

10. Kläranlage nach Anspruch 9, **dadurch gekennzeichnet, dass** das Befestigungsmittel (40) eine in Einbausituation vertikale Nut (41) im Gehäuse (10) der Rückhaltevorrichtung (1) aufweist.

## Claims

1. A treatment plant for wastewater with a clarifier (2) and with carrier material bodies (3) arranged therein, swirlable in the clarifier (2) and covered with a biofilm, with an inlet (21) for wastewater, which if necessary flows from a primary clarifier and with a drain (22) for clear water, wherein the drain (22) comprises a retaining device (1) and the retaining device (1) has a housing (10), which spans a volume with circular openings (15) which have an opening width slightly smaller than the smallest dimension of the carrier material bodies (3) for retaining the carrier material bodies (3) in the clarifier (2), **characterised in that** the housing (10) is nestled with its rear side against a wall (20) of the clarifier (2) and spans a flat volume, nestled on the wall (20) of the clarifier (2), wherein the rear side of the housing (10) nestled on the wall (20) of the clarifier (2) has a pipe connection or pipe socket (12) for the outlet (22) and moreover is formed closed, wherein, moreover, the housing (10) has a plurality of elliptical or circular openings (15).

2. A treatment plant according to claim 1, **characterised in that** a retention device (1) is arranged on the inlet (21) and on the outlet (22) in the clarifier (2).

3. A treatment plant according to claim 1 or 2, **characterised in that** the housing (10) spans a flat trapezoidal or cuboidal volume, wherein one or more side surfaces (13), facing upwardly, in assembly condition have no openings (15) in the clarifier (2).

4. A treatment plant according to claim 1, 2 or 3, **characterised in that** the housing (10) is tapered downwards in assembly condition in the clarifier (2).

5. A treatment plant according to one of the previous claims, **characterised in that** in assembly condition the opening (15') of the retaining device (1) lying lowest in the clarifier (2) is still situated within the layer (30) of the non-fluidised carrier material bodies (3) forming in the clarifier (2).

6. A treatment plant according to one of the previous claims, **characterised in that** the circular openings (15, 15') have a diameter of 10 mm to 30 mm, in particular 18 mm to 23 mm.

7. A treatment plant according to one of the previous claims, **characterised in that** a receiving groove (16) for a circumferential seal (17) is provided in the rear side (11) of the housing (10) around the pipe connection or pipe socket (12) formed thereon.

8. A treatment plant according to one of the previous claims, **characterised in that** the retaining device (1) is made of plastic.

9. A treatment plant according to one of the previous claims, **characterised in that** the housing (10) of the retaining device (1) has fastening means (40) for holding a fine-bubble ventilation device (4), so that the ventilation device (4) in assembly condition below the retaining device (1) is arranged in the clarifier (2).

10. A treatment plant according to claim 9, **characterised in that** the fastening means (40) has a vertical groove (41) in assembly condition in the housing (10) of the retaining device (1).

## Revendications

1. Station de traitement des eaux usées avec un clarificateur (2) et des corps de matériau support (3) disposés à l'intérieur, susceptibles d'être agités dans le clarificateur (2) et recouverts d'un biofilm, avec une entrée (21) pour les eaux usées, qui, si nécessaire, s'écoulent d'un clarificateur primaire et d'un drain (22) pour l'eau claire, dans lequel le drain (22) comprend un dispositif de retenue (1) et le dispositif de retenue (1) comporte un logement (10), qui enjambe un volume avec des ouvertures circulaires (15) qui ont une largeur d'ouverture légèrement inférieure à la plus petite dimension des corps de matériau support (3) pour retenir les corps de matériau support (3) dans le clarificateur (2), en ce que le boîtier (10) est niché avec sa face arrière contre une paroi (20) du clarificateur (2) et couvre un volume plat, nichée sur la paroi (20) du clarificateur (2), dans lequel le côté arrière du boîtier (10) niché sur la paroi (20) du clarificateur (2) comporte une connexion de tuyau ou une douille de tuyau (12) pour la sortie (22) et de plus est formé fermé, dans lequel, de plus, le boîtier (10) comporte une pluralité d'ouvertures elliptiques ou circulaires (15).

2. Station de traitement selon la revendication 1, **caractérisée en ce qu'**un dispositif de retenue (1) est disposé sur l'entrée (21) et sur la sortie (22) dans le clarificateur (2).

3. Station de traitement selon la revendication 1 ou 2, **caractérisée en ce que** le boîtier (10) s'étend sur un volume plat trapézoïdal ou cuboïde , dans lequel une ou plusieurs surfaces latérales (13), orientées vers le haut, dans une situation d'assemblage, n'ont pas d'ouvertures (15) dans le clarificateur (2).

4. Station de traitement selon la revendication 1, 2 ou 3, **caractérisée** que le boîtier (10) est conique vers le bas en condition d'assemblage dans le clarificateur (2).

5. Station d'épuration selon l'une des revendications précédentes, **caractérisée en ce que** en condition d'assemblage, l'ouverture (15') du dispositif de retenue (1) située le plus bas dans le clarificateur (2) est toujours située dans la couche (30) des corps de matériau support (3) non fluidisés se formant dans le clarificateur ( 2).

6. Station d'épuration selon l'une des revendications précédentes, **caractérisée en ce que** les ouvertures circulaires (15, 15') ont un diamètre de 10 mm à 30 mm, en particulier de 18 mm à 23 mm.

7. Station d'épuration selon l'une des revendications précédentes, **caractérisée en ce qu'**une rainure de réception (16) pour un joint circonférentiel (17) est prévue dans le côté arrière (11) du boîtier (10) autour de la connexion de tuyau ou de la douille de tuyau (12) formée dessus.

8. Station d'épuration selon l'une des revendications précédentes, **caractérisée en ce que** le dispositif de retenue (1) est en plastique.

9. Station d'épuration selon l'une des revendications précédentes, **caractérisée en ce que** le boîtier (10) du dispositif de retenue (1) comporte des moyens de fixation (40) pour maintenir un dispositif de ventilation à bulles fines (4), de sorte que le dispositif de ventilation (4) en condition d'assemblage sous le dispositif de retenue (1) est disposé dans le clarificateur (2).

10. Station d'épuration selon la revendication 9, **caractérisée en ce que** les moyens de fixation (40) présentent une rainure verticale (41) en condition d'assemblage dans le boîtier (10) du dispositif de retenue (1).
